# EUROPÄISCHE PATENTSCHRIFT

(11) **EP 1 195 236 B1**
(45) Veröffentlichungstag und Bekanntmachung des Hinweises auf die Patenterteilung: **08.02.2006**
(21) Anmeldenummer: 01123723.7
(22) Anmeldetag: 04.10.2001
(51) Int. Cl.: B29C 49/42

(54) **Vorrichtung zum Herstellen von hohlkörperförmigen Artikeln aus thermoplastischem Kunststoff durch Saugblasen**
Apparatus for producing hollow shaped articles of thermoplastic material by suction and blowing
Dispositif pour fabriquer des articles de forme creuse en matière thermoplastique par aspiration et soufflage

(30) Priorität: 06.10.2000 DE 10049446
(43) Veröffentlichungstag der Anmeldung: 10.04.2002
(73) Patentinhaber: Kautex Maschinenbau GmbH, 53229 Bonn (DE)
(72) Erfinder: Döhmen, Willi, 41065 Mönchengladbach (DE); Schüller, Frank, 50226 Frechen (Königsdorf) (DE); Wehrens, Dirk, 53757 St. Augustin (DE)
(74) Vertreter: Valentin, Ekkehard

(56) Entgegenhaltungen:
- EP-A- 0 553 486
- EP-A- 1 040 904
- DE-A- 19 845 269
- PATENT ABSTRACTS OF JAPAN vol. 009, no. 303 (M-434), 30. November 1985 (1985-11-30) & JP 60 141512 A (TOYODA GOSEI KK), 26. Juli 1985 (1985-07-26)
- PATENT ABSTRACTS OF JAPAN vol. 010, no. 207 (M-500), 19. Juli 1986 (1986-07-19) & JP 61 047228 A (CANON INC), 7. März 1986 (1986-03-07)

## Beschreibung

Die Erfindung betrifft eine Vorrichtung zum Herstellen von hohlkörperförmigen Artikeln aus thermoplastischem Kunststoff durch Saugblasen, umfassend ein aus zwei in eine Offen- und in eine verriegelbare Schließstellung bewegbaren Formhälften bestehendes Werkzeug, dem zumindest am auslaufseitigen Ende ein die Artikelkavität bzw. deren Kavitätenkanal verschließender Schieber zugeordnet ist, eine am auslaufseitigen Ende saugglockenartig an das Werkzeug angeschlossene Saugvorrichtung und mindestens einen Bereitstellungskopf, der einen Vorformlingsschlauch bereitstellt. Eine solche Saugblasvorrichtung ist sowohl durch die DE-A-198 45 269, als auch durch die DE-Z "Plastverarbeiter" 44. Jahrgang 1993 Nr. 12, Seiten 46 bis 49, bekanntgeworden.

Beim Saugblasverfahren (vgl. auch 'Technische Mitteilungen Krupp" 2/1998, Seiten 49 bis 51), wird der Vorformlingsschlauch unmittelbar oder gegebenenfalls unter Zwischenschaltung eines Schlauchzubringers aus dem Extrusions- bzw. Koextrusionskopf - im folgenden Bereitstellungskopf genannt - in das geschlossene Werkzeug extrudiert bzw. durch das geschlossene Blaswerkzeug gesaugt, wobei er auf einem von der werkzeugunterseitig bzw. auslaufseitig angeordneten Saugvorrichtung erzeugten Luftpolster in die Endposition gleitet. Nach dem Schließen des Werkzeugs beginnt dann der eigentliche Blasvorgang, in dem Blasluft den Vorformlingsschlauch gegen die Formkavität aufweitet, d.h. in die Endkontur des Fertigartikels bringt.

Eine Saugblasmaschine bietet gegenüber den hinlänglich bekannten, konventionellen Blasformmaschinen, wie durch die DE 37 22 340 A1 bekanntgeworden, mehrere Vorteile. Da der Vorformlingsschlauch in das geschlossene Blaswerkzeug eingesaugt wird, können keine unerwünschten Abquetschungen auftreten. Die Saugblasartikel haben folglich keine oder nur in den Endbereichen sehr kleine Schweißnähte, so dass die Schließkraft im wesentlichen lediglich zum Zuhalten des Blaswerkzeuges gegen die durch den Druck der Blasluft erzeugten Kräfte benötigt wird. Für die Schließeinheit ergibt sich damit ein deutlich niedriger Energieverbrauch, wie auch eine aufwendige Schließregelung mit Positions- und Geschwindigkeitsregler entfällt, die bei den bekannten Blasformmaschinen ansonsten verfahrenstechnisch für eine optimale Schweißnahtausbildung notwendig sind.

Bei dem aus der DE 198 45 269 A1 bekannten Saugblasverfahren soll ein störungssicherer Transport des Vorformlingsschlauches durch die Artikelkavität bzw. den Formhohlraum dadurch ermöglicht werden, dass der Zwischenraum zwischen der Düse und der oberen Öffnung des Formhohlraumes gegen die Umgebung abgeschlossen und in dem Zwischenraum ein Luftstrom eingeleitet wird, der über den Formhohlraum abströmt. Der Zusatzstrom der in die obere Öffnung eingeblasenen Luft soll ein Luftlager für den durch den Formhohlraum zu transportierenden Schlauch schaffen und bewirken, dass der Vorformlingsschlauch auch im Bereich von gegebenenfalls vorhandenen Krümmungen des Formhohlraums einen hinreichenden Abstand von dessen Wandung einhält. Der ergänzend eingeleitete Luftstrom kann zusätzlich erwärmt werden. Trotzdem kommt es beim Saugblasen von vor allem im Durchmesser kleinen und/oder langen gewundenen und damit kompliziert geformten Fertigartikeln zu Schwierigkeiten.

Der Erfindung liegt daher die Aufgabe zugrunde, eine gattungsgemäße Vorrichtung zu schaffen, die eine verbesserte Herstellung auch komplexer, insbesondere von im Durchmesser kleinen und/oder langen Blasteilen ermöglicht.

Diese Aufgabe wird in verblüffend einfacher Weise dadurch gelöst, dass die Artikelkavität entlang der Formtrennung der Formhälften des Werkzeuges abgedichtet ist. Somit kann in der Trennebene des Werkzeugs keine Fremdluft angesaugt werden und in den Kavitätenkanal bzw. an den darin eingesaugten Schlauch gelangen. Damit lassen sich mehrere Nachteile gleichzeitig vermeiden und der Produktionsablauf entscheidend verbessern. Es wurde erkannt, dass insbesondere bei langen und/oder im Durchmesser kleinen Blasteilen der Strömungswiderstand zwischen Kavität (Kanalwand) und dem Vorformlingsschlauch stark ansteigt. Das erfordert einen starken Unterdruck, damit ein ausreichender Luftstrom entsteht und sich aufrechterhalten läßt, um den Schlauch überhaupt durch die Kavität leiten zu können. Aufgrund des (größeren) Druckgefälles steigt zudem das Volumen an Umgebungsluft an, welches - ohne die erfindungsgemäße Abdichtung, die vorzugsweise benachbart zum gesamten Konturenverlauf der Artikelkavität in zumindest einer Formhälfte vorgesehen ist und die Artikelkavität somit vollständig um- bzw. einschließt - durch die Formtrennaht in den Kavitätenkanal strömt. Insbesondere bei langen und im Durchmesser kleinen Blasteilen kann dieser Effekt entscheidend sein und die Herstellbarkeit eines solchen Teiles mitunter völlig ausschließen oder zu Ausschuß führen.

Hinzu kommt weiterhin, daß die zur Verwendung kommenden Werkzeuge wegen der häufig komplexen Formgebung der Blasteile in der Teilung unregelmäßig gekrümmt und daher nur mit erheblichen Aufwand paßgenau und dicht herstellbar sind. Durch mehr oder weniger große Undichtigkeiten in diesem Bereich wird unvermeidbar Fremdluft angesaugt. Aber nicht nur bei langen, dünnen Blasteilen sondern auch bei anderen Saugblasteilen kann das Einströmen von Fremdluft problematisch sein. So spielt bei Kunststoffmaterialien, welche nur einen relativ schmalen Temperaturbereich besitzen, in welchen sie verarbeitet werden können, die Abkühlung des Schlauches durch die den Schlauch führende Luft eine erhebliche Rolle. Da die Werkzeuge üblicher Weise gekühlt werden, ist auch die durch die Undichtigkeiten in den Kavitätenkanal strömende Fremdluft gekühlt und kann zu einer unzulässigen partiellen Kühlung der Schlauchoberfläche führen. Die erfindungsgemäße Abdichtung verhindert das Eindringen von Fremdluft, womit auch die erforderliche Präzision des Werkzeugs in Bezug auf die Ausbildung der Anlageflächen in der Werkzeugtrennung erheblich gesenkt werden kann. Die Werkzeugherstellung wird damit einfacher und kostengünstiger, d.h. wesentlich wirtschaftlicher.

Eine bevorzugte Ausgestaltung der Erfindung sieht vor, dass an der Oberseite des Werkzeugs eine Heizeinrichtung vorgesehen ist. Das Erwärmen der Luft, z.B. mittels eines den Schlauch ringförmig umgebenden Heizgebläses, soll vorteilhaft in unmittelbarer Nähe der oberen bzw. eingangsseitigen Öffnung des Kavitätenkanals, in welchen der Schlauch eingezogen wird, erfolgen.

Die Wirkung dieser Maßnahme kumuliert sich durch die Abdichtung des Kavitätenkanals. Es tritt kein Temperaturgefälle mehr auf, weil kalte Außenluft nicht mehr über Undichtigkeiten der Trennaht in den Kavitätenkanal eintreten kann. Durch beide Mittel/Maßnahmen wird der Schlauch beim Durchleiten durch den Kavitätenkanal auf der günstigen Verarbeitungstemperatur gehalten. Dies gilt besonders auch für das vorauseilende Ende des Schlauches, welches nunmehr auch noch nach oben gesaugt werden kann, während bei allen bisherigen Fällen der Vorformlingsschlauch im wesentlichen vertikal nach unten verläuft bzw. abfallend endet.

Hierbei empfiehlt es sich, dass der Heizeinrichtung ein Temperaturregler zugeordnet ist. Die Regelung unterstützt, dass das für den jeweiligen Anwendungsfall benötigte Temperaturniveau eingehalten wird.

Nach einem Vorschlag der Erfindung ist das Dichtungsmittel (Band, Schnur, Streifen oder dergleichen Dichtkörper) in einer Nut einer Formhälfte angeordnet. Das Dichtmittel läßt sich bei geöffnetem Werkzeug einlegen, was somit keinen großen Aufwand erfordert. Eine von einer Nut aufgenommene Dichtung ist gegenüber einer alternativ im einfachsten Fall aufgeklebten Dichtung dauerhafter und läßt eine längere Standzeit erwarten. Selbstverständlich kann auch eine in eine Nut eingelegte Dichtung zusätzlich noch verklebt werden. Die Abdichtung bzw. die Dichtschnur, das Dichtband oder dergleichen sorgt nicht nur für eine von Fremdluft freie Artikelkavität, sondern macht auch aufwendig planzuschleifende Formtrennebenen entbehrlich.

Wenn nach einem weiteren Vorschlag der Erfindung die Nut hinterschnitten ist, unterstützt die Hinterschneidung den sicheren Halt der Dichtung in der Nut. Von Vorteil können zudem von vornherein solche Dichtungen verwendet werden, die aufgrund ihrer Gestaltung die Dichtwirkung verstärken, wenn das Druckgefälle vor oder hinter der Dichtung ansteigt. Das erfüllen z.B. V-förmige Dichtlippen, wobei das "V" von der Seite mit dem höheren Druck geöffnet wird, so daß sich die Schenkel dichtend an die Formen- bzw. Nutwandung anlegen.

Weitere Einzelheiten und Vorteile der Erfindung ergeben sich aus den Patentansprüchen und der nachfolgenden Beschreibung von in den Zeichnungen sehr schematisch und nicht maßstäblich dargestellten Ausführungsbeispielen des Gegenstandes der Erfindung. Es zeigen:
- Figur 1: als Einzelheit einer weiter nicht gezeigten Saugblasformmaschine deren geöffnetes Werkzeug mit darüber angeordnetem Bereitstellungskopf, vor der Entnahme des fertigen Artikels aus dem geöffneten Werkzeug;
- Figur 2: eine Teilansicht eines Saugblas-Werkzeugs zum Herstellen eines im Durchmesser kleinen und langen Blasteiles, in einer Verfahrensweise mit nach oben hin auslaufendem Ende des Vorformlingsschlauches bzw. Fertigartikels; und
- Fig. 3: in den Teilansichten a) bis d) verschiedene Dichtungsmittel und in eine Formhälfte eingearbeitete Nuten zur Aufnahme der Dichtungsmittel.

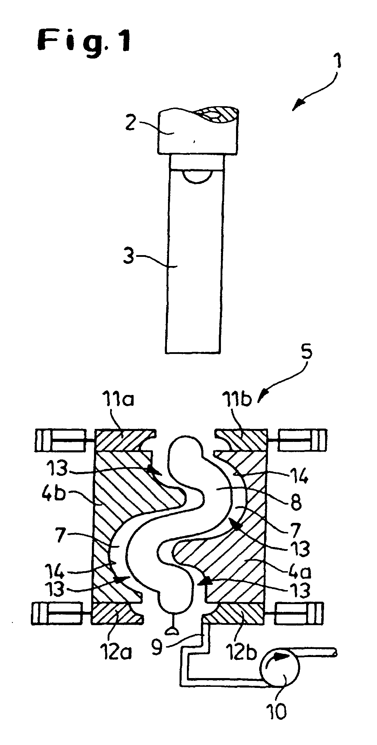

Eine in ihrer Gesamtheit in Fig. 1 nicht dargestellte Saugblas-Formmaschine 1 umfaßt einen Bereitstellungskopf 2, dem das zur Herstellung des sauggeblasenen Hohlkörpers benötigte aufbereitete Kunststoffmaterial bekanntermaßen mittels Extruder und Verteiler zugeleitet wird. Der Bereitstellungskopf 2 gibt die für das Saugblasverfahren benötigten Vorformlinge in Form von Schlauchabschnitten bzw. Vorformlingsschläuchen 3 in ein hier aus den beiden Formhälften 4a, 4b bestehendes Werkzeug - bzw. Blasform - 5 ab, das zur Aufnahme des Vorformlingsschlauches 3 mit einer Artikelkavität 7 ausgebildet ist. Der Blasform bzw. dem Werkzeug 5 sind obere und untere Schieber 11a, 11b bzw. 12a, 12b zugeordnet. Die Formhälften 4a, 4b des Werkzeugs 5 werden von Schließzylinder einer nicht gezeigten Schließeinheit geschlossen. Unabhängig hiervon sind die oberen und unteren Schieber 11a, 11b bzw. 12a, 12b über jeweils eigene Antriebe zu öffnen und zu schließen.

Zur Aufnahme eines neuen Vorformlings nach der Fertigartikel-Entnahme wird die Blasform bzw. das Werkzeug 5 geschlossen. Eine von unterhalb mittels eines Adapters 9 an das Werkzeug 5 angeschlossene Saugvorrichtung 10 wird eingeschaltet. Ergänzend zu dem damit einsetzenden Ansaugen des neu zugeführten Vorformlingsschlauches 3 in die Artikelkavität 7 kann Vorblasluft in den Vorformlingsschlauch eingeblasen werden. Sobald die im Ausführungsbeispiel an der Ober- und der Unterseite des Werkzeugs 5 angeordneten Schieber 11a, 11b bzw. 12a, 12b zum Verschließen der Artikelkavität 7 zugefahren wurden, wird die Vorblasluft ausgeschaltet und das Ausformen des Vorformlingsschlauches 3 zu dem fertigen Artikel 8 mittels Blasluft über Blasnadeln oder -dorne bewirkt. Wenn der Fertigartikel 8 ausgeformt und abgekühlt ist, werden die Formhälften 4a, 4b in die Position gemäß der Darstellung in Fig. 1 geöffnet, so dass der Fertigartikel 8 zur Entnahme, bspw. mittels eines Entnahmegreifers oder einer Maske, frei liegt. Von dort kann der Fertigartikel 8 in Nachfolgestationen, z.B. zum Stanzen und zum Nachkühlen, weiter transportiert werden.

Beim Saugblasprozeß mit gegenüber der Darstellung nach Fig. 1 geschlossenem Werkzeug 5 wird unvermeidlich kalte bzw. kühle Luft aus der Umgebung bzw. Umwelt eingezogen, wie durch die Pfeile 13 angedeutet. Das Ansaugen von Fremdluft entlang der Formtrennung, d.h. der Trennebene der beiden Formhälften 4a, 4b wird beim Saugblasen von im Durchmesser kleinen und/oder langen Blasteiten wegen des dafür benötigten starken Luftstromes noch weiter begünstigt, wie eingangs beschrieben. Damit Fremdluft nicht an den Vorformlingsschlauch gelangen kann, was wegen der dann unvermeidlichen partiellen, unterschiedlichen Abkühlung des Schlauches für jegliche Schlauchabmessung und insbesondere bei Kunststoffmaterialien mit einem engen Temperaturbereich zudem dessen Verformbarkeit nachteilig beeinflussen würde, ist die Artikelkavität 7 mittels eines in den Formhälften 4a, 4b in der Trennebene des Werkzeugs 5 angeordnetem Dichtmittel 14 gegen die Umwelt bzw. Umgebung abgedichtet. Die angesogene bzw. abzusaugende Fremd- bzw. Umgebungsluft kann daher keinen nachteiligen Einfluß mehr auf den Luftvolumenstrom und auch auf den Vorformlingsschlauch 3 selbst nehmen. Es wird somit ein stets ausreichender Luftstrom aufrechterhalten, wobei gleichzeitig der Vorformlingsschlauch über seine gesamte Länge ein im wesentlichen gleichbleibendes Temperaturniveau aufweist und insbesondere keine unterkühlten Stellen mehr besitzt.

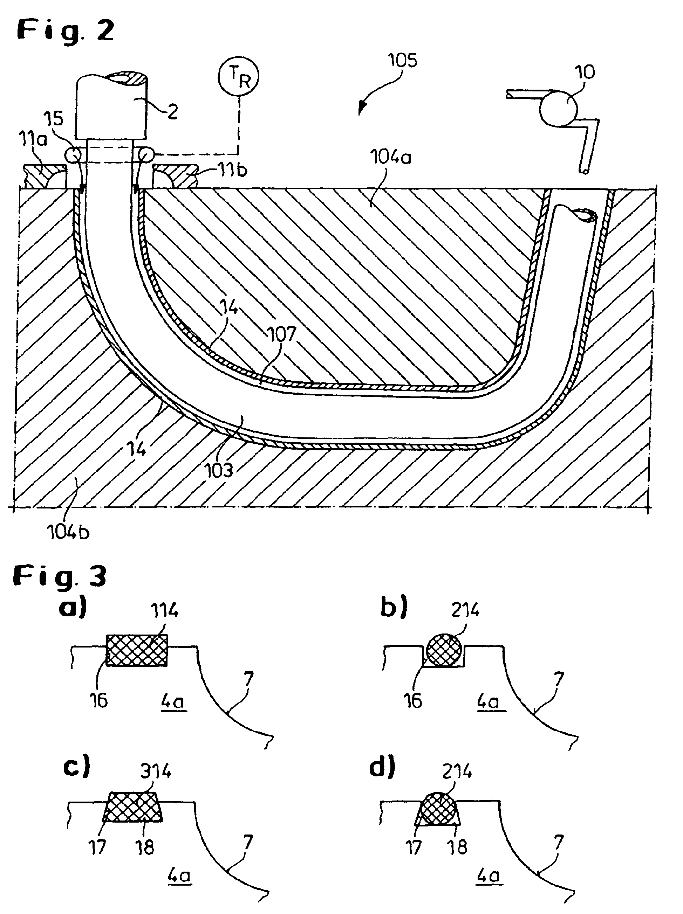

Als Dichtmittel 14, das zur Abdichtung möglichst nahe zur Kavität bzw. zum Kavitätenkanal 7 verlaufen sollte, eignen sich beliebige im Handel erhältliche Dichtschnüre bzw. -bänder oder -streifen 114 bzw. 214 oder 314, wie in Figur 3 beispielhaft in unterschiedlicher Geometrie (rund, rechteckig, trapezförmig) gezeigt. Diese Dichtungsmittel werden im Ausführungsbeispiel von Nuten 16 oder 17 aufgenommen, die in eine Formhälfte 4a, 4b eingearbeitet sind, in denen sie entweder formschlüssig der durch Klebung unterstützt gehalten werden. Zur Dauerhaftigkeit des Halts können Nuten 17 mit Hinterschneidungen 18 (vgl. Fig. 3c und d) beitragen.

Die gegen das Ansaugen von Fremdluft abgedichtete Artikel-Kavität und der deshalb aufrechtzuerhaltende ausreichende Luftstrom sowie die gleichzeitig verbesserte Verformbarkeit des Vorformlingsschlauches kann dadurch weiter begünstigt werden, daß an der Oberseite bzw. einlaufseitig des Werkzeugs 105 eine an einen Temperaturregler T_{R} angeschlossene Heizeinrichtung 15, im Ausführungsbeispiel ausgebildet als ein den Schlauch 103 ringförmig umgebendes, in unmittelbarer Nähe der Öffnung der Artikelkavität 107 oberhalb der eintrittsseitigen Schieber 11a, 11b angeordnetes Heizgebläse mit Luftzuströmung (vgl. die Pfeile in Fig. 2) in die Artikelkavität, vorgesehen ist. Das wird aus Fig. 2 für dort allerdings ein Werkzeug 105 anderer Art deutlich, bei dem das voreilende Ende des Vorformlingsschlauches 103 hochgesaugt wird; die an diesem Ende des Kavitätenkanals wie eingangsseitig angeordneten austrittsseitigen Schieber (vgl. in Figur 1 die Ziffern 12a, 12b) sind hier der Einfachheit halber nicht gezeigt und die angeschlossene Saugvorrichtung 10 ist nur angedeutet. Das Werkzeug 105 weist hier sich senkrecht zur Zeichnungsebene öffnende und schließende Formhälften 104a, 104b auf. Das Dichtmittel 14 verhindert in diesem Fall nicht nur das Einsaugen von kalter Fremd- bzw. Umweltluft, sondern trägt weiterhin dazu bei, dass sich die mit dem einsetzenden Ansaugen des Vorformlingsschlauches 103 eingesogene, temperierte Luft, die sich gegebenenfalls noch durch zusätzliche Vorblasluft unterstützen läßt, auf einem Temperaturniveau halten läßt, das für den Vorformlingsschlauch unschädlich ist.

Wie in Fig. 2 dargestellt, ermöglichen der während des gesamten Schlauch-Einsaugvorgangs von Fremdluft unbeeinflußt ausreichend groß aufrechterhaltende Luft- bzw. Stützstrom und die über die gesamte Länge des Vorformlingsschlauches 103 nahezu gleiche Temperatur, dass sich sogar Fertigartikel herstellen lassen, die bei entsprechender Konturgebung der Artikelkavität 107 mit ihren voreilenden Enden nach oben hin auslaufend ausgebildet sind. Das Spektrum der auf diese Weise herzustellenden komplexen Geometrien wird somit deutlich erweitert.

## Patentansprüche

1. Vorrichtung zum Herstellen von hohlkörperförmigen Artikeln (8) aus thermoplastischem Kunststoff durch Saugblasen, umfassend ein aus zwei in eine Offen- und in eine verriegelbare Schließstellung bewegbaren Formhälften (4a, 4b) bestehendes Werkzeug (5), dem zumindest am auslaufseitigen Ende ein die Artikelkavität (7, 107) bzw. deren Kavitätenkanal verschließender Schieber (11, 12) zugeordnet ist, eine am auslaufseitigen Ende saugglockenartig an das Werkzeug (5) angeschlossene Saugvorrichtung (10) und mindestens einen Bereitstellungskopf (2), der einen Vorformlingsschlauch (3, 103) bereitstellt,
**dadurch gekennzeichnet,**
**dass** die Artikelkavität (7, 107) entlang der Formtrennung der Formhälften (4a, 4b) des Werkzeuges (5) gegen das Ansaugen von Fremdluft abgedichtet ist.

2. Vorrichtung nach Anspruch 1,
**dadurch gekennzeichnet,**
**dass** das die Artikelkavität (7, 107) um- bzw. einschließende Dichtungsmittel (14) benachbart zum gesamten Konturenverlauf der Artikelkavität (7, 107) in zumindest einer Formhälfte (4a bzw. 4b) vorgesehen ist.

3. Vorrichtung nach Anspruch 1 oder 2,
**dadurch gekennzeichnet,**
**daß** das Dichtungsmittel (14) in einer Nut (16; 17) der Formhälfte (4a bzw. 4b) angeordnet ist.

4. Vorrichtung nach Anspruch 3,
**dadurch gekennzeichnet,**
**daß** die Nut (17) hinterschnitten ausgebildet ist.

5. Vorrichtung nach einem der Ansprüche 1 bis 4,
**dadurch gekennzeichnet,**
**dass** am einlaufseitigen Ende des Werkzeugs (5) eine Heizeinrichtung (15) vorgesehen ist.

6. Vorrichtung nach Anspruch 5,
**dadurch gekennzeichnet,**
**dass** der Heizeinrichtung (15) ein Temperaturregler (T_{R}) zugeordnet ist.

## Claims

1. An apparatus for producing hollow shaped articles (8) of thermoplastic material by means of suction and blowing, with a tool (5) consisting of two mould halves (4a, 4b) that can be moved into an open position and into a lockable closed position, wherein a slide (11, 12) for closing the article cavity (7, 107) or its cavity channel, respectively, is assigned to said tool at least on the outlet end, with a suction device (10) that is connected to the tool (5) in a plunger-like fashion on the outlet end, and with at least one delivery head (2) that delivers a tubular preform (3, 103),
**characterized in**
**that** the article cavity (7, 107) is sealed along the parting line of the mould halves (4a, 4b) of the tool (5) in order to prevent outside air from being taken in.

2. The apparatus according to Claim 1,
**characterized in**
**that** the sealing means (14) surrounding or enclosing the article cavity (7, 107) is arranged adjacent to the entire contour of the article cavity (7, 107) in at least one mould half (4a or 4b).

3. The apparatus according to Claim 1 or 2,
**characterized in**
**that** the sealing means (14) is arranged in a groove (16; 17) of the mould half ((4a or 4b).

4. The apparatus according to Claim 3,
**characterized in**
**that** the groove (17) is realized in an undercut fashion.

5. The device according to one of Claims 1-4,
**characterized in**
**that** a heating device (15) is provided on the inlet end of the tool (5).

6. The apparatus according to Claim 5,
**characterized in**
**that** the heating device (15) is provided with a temperature control (T_{R}).

## Revendications

1. Procédé de fabrication d'articles en forme de corps creux (8) en matière thermoplastique par aspiration-soufflage, comprenant un outillage (5) composé de deux demi-moules (4a, 4b) mobiles vers une position d'ouverture et une position de fermeture verrouillable, auquel est associé, du moins à l'extrémité située côté sortie, un tiroir (11, 12) fermant la cavité de l'article (7, 107) ou son canal de cavité, un dispositif d'aspiration (10) raccordé, à l'extrémité côté sortie, à la manière d'une ventouse d'aspiration, à l'outillage (5) et au moins une tête de présentation (2) qui présente un tuyau d'ébauche (3, 103),
**caractérisé en ce que**
la cavité de l'article (7, 107), le long de la séparation de moule des demi-moules (4a, 4b) de l'outillage (5), est étanchéifiée contre l'aspiration d'air extérieur.

2. Procédé selon la revendication 1,
**caractérisé en ce que**
le joint d'étanchéité (14) entourant ou circonscrivant la cavité de l'article (7, 107) est prévu à proximité de l'ensemble de la ligne de contour de la cavité de l'article (7, 107) dans au moins un demi-moule (4a ou 4b).

3. Procédé selon la revendication 1 ou 2,
**caractérisé en ce que**
le joint d'étanchéité (14) est disposé dans une gorge (16 ; 17) du demi-moule (4a ou 4b).

4. Procédé selon la revendication 3,
**caractérisé en ce que**
la gorge (17) est réalisée par dégagement.

5. Procédé selon une des revendications 1 à 4,
**caractérisé en ce que**,
à l'extrémité située côté sortie de l'outillage (5), il est prévu un système de chauffage (15).

6. Procédé selon la revendication 5,
**caractérisé en ce que**
un régulateur de température (T_{R}) est associé au système de chauffage (15).
